# EUROPÄISCHE PATENTANMELDUNG

(11) **EP 2 487 472 A2**
(43) Veröffentlichungstag der Anmeldung: **15.08.2012**
(21) Anmeldenummer: 12000779.4
(22) Anmeldetag: 07.02.2012
(51) Int. Cl.: G01F 23/284

(54) **Mikrowellensendeeinrichtung und Füllstandmessgerät**

(30) Priorität: 09.02.2011 DE 102011010801
(71) Anmelder: KROHNE Messtechnik GmbH, 47058 Duisburg (DE)
(72) Erfinder: Wegemann, Uwe, 45549 Sprockhövel (DE); Angerstein, Peter, 46149 Oberhausen (DE); Deilmann, Michael, Dr., 45257 Essen (DE)
(74) Vertreter: Gesthuysen, von Rohr & Eggert

(57) **Zusammenfassung**

Beschrieben und dargestellt ist eine Mikrowellensendeeinrichtung für ein Füllstandmessgerät (1) mit einer Elektronikeinrichtung, einem Mikrowellensender und einem Hohlleiter (3), wobei der Hohlleiterinnenraum mit Vergussmasse vergossen ist.

Eine Mikrowellensendeeinrichtung, die besonders kompakt und kostengünstig ist, wird erfindungsgemäß dadurch realisiert, dass der Mikrowellensender und die Elektronikeinrichtung einen Verguss (4) aufweisen.

## Beschreibung

Die Erfindung betrifft eine Mikrowellensendeeinrichtung für ein Füllstandmessgerät mit einer Elektronikeinrichtung, einem Mikrowellensender und einem Hohlleiter, wobei der Hohlleiterinnenraum mit Vergussmasse vergossen ist. Die Erfindung betrifft ferner ein Füllstandmessgerät mit einer solchen Mikrowellensendeeinrichtung.

Füllstandmessgeräte werden üblicherweise eingesetzt, um den Füllstand von Flüssigkeiten oder Schüttgütern in Behältern zu überwachen. Die hierfür eingesetzten Messverfahren sind vielfältig und umfassen beispielsweise mechanische Messverfahren, wie z. B. Schwimmer oder Vibrationssensoren, aber auch kapazitive, konduktive und optische Messverfahren. Die eingesetzten Messverfahren werden unterschieden in berührende und berührungslose Messverfahren. Bei den Berührungslosen Messverfahren wird besonders häufig mit Radar-Technik im Mikrowellenbereich und benachbarten Frequenzbereichen gearbeitet. Von einem derartigen Füllstandmessgerät und einer in ihm zum Einsatz kommenden Mikrowellensendeeinrichtung geht die Erfindung aus.

Selbstverständlich kann mit einem nach dem Radarprinzip arbeitenden Füllstandmessgerät und einer entsprechenden Mikrowellensendeeinrichtung nicht nur der Füllstand eines Mediums in einem Behälter ermittelt werden, sondern können vielmehr auch beliebige Abstände von Oberflächen zu dem "Füllstandmessgerät" bzw. zu der Mikrowellensendeinrichtung ermittelt werden, die die von dem Messgerät bzw. von der Sendeeinrichtung emittierten Mikrowellen reflektieren; gleichwohl wird weiterhin von einem Füllstandmessgerät bzw. von einer Mikrowellensendeeinrichtung für ein solches Füllstandmessgerät gesprochen.

Ein gattungsgemäßes Füllstandmessgerät weist eine Mikrowellensendeeinrichtung auf, wobei die Mikrowellensendeeinrichtung eine Elektronikeinrichtung zur Erzeugung von Mikrowellensignalen, einen Hohlleiter zur Leitung der Mikrowellensignale und einen Mikrowellensender umfasst, wobei der Mikrowellensender die Mikrowellensignale in den Hohlleiter einkoppelt. Diese Mikrowellensignale werden von dem Hohlleiter geleitet und in den Behälter abgestrahlt, in dem sich das Medium befindet, dessen Füllstand zu bestimmen ist. Von dem Medium im Behälter werden diese Mikrowellensignale reflektiert und gelangen in den Hohlleiter zurück zum Mikrowellensender, der üblicherweise gleichzeitig auch als Mikrowellenempfänger fungiert.

Aus der WO 02/16889 A1 ist eine Vorrichtung zur Bestimmung des Füllstandes eines Füllguts in einem Behälter bekannt, mit einer Signalerzeugungseinheit, die elektromagnetische Messsignale erzeugt, mit einer Sende-/Empfangseinheit, die die Messsignale über eine Antenne in Richtung der Oberfläche des Füllguts aussendet und die die an der Oberfläche des Füllguts reflektierten Echosignale empfängt, wobei die Antenne aus einem Wellenleiter besteht, der sich in Abstrahlrichtung in einen Hohlraum einer definierten Form aufweitet, und mit einer Auswerteeinheit, die anhand der Laufzeit der Messsignale den Füllstand in dem Behälter ermittelt. Dieses Füllstandmessgerät reduziert eine Ansatzbildung, d. h. dass eine Anheftung von Medium an der Vorrichtung nahezu ausgeschlossen wird, indem ein dielektrisches Füllmaterial vorgesehen ist, das den Wellenleiter zumindest teilweise ausfüllt und das den aufgeweiteten Hohlraum der Antenne nahezu vollständig ausfüllt.

Die US 6,987,481 B2 offenbart ein Radarfüllstandmessgerät, das in der Lage ist, eine elliptisch polarisierte Welle mit einem Richtkoppler zu erzeugen und zu empfangen. Das Radarfüllstandmessgerät weist des Weiteren einen einseitig geschlossen Hohlleiter auf, der mit einer Vergussmasse vergossen ist.

Aus dem Stand der Technik bekannte Füllstandmessgeräte weisen eine unvorteilhafte Baugröße auf, insbesondere wenn am Montageort des Messgeräts Platzmangel herrscht, der Zugang zum Montageort beengt ist oder der zu vermessende Hohlraum selbst kleine Abmessungen aufweist. Diese Baugröße ist unter anderem dadurch nach unten begrenzt, dass bei einer vorgegeben Frequenz der verwendeten Mikrowellenstrahlung, die zur Leitung und Heranführung der verwendeten Mikrowellenstrahlung üblicherweise eingesetzten Streifenleiter und/oder Hohlleitungskomponenten eine Mindestgröße aufweisen müssen, damit die Streifenleiter bzw. Leitungskomponenten überhaupt in der Lage sind, die Mikrowellenstrahlung verlustarm zu leiten.

Damit ist es die Aufgabe der Erfindung, eine Mikrowellensendeeinrichtung und ein Füllstandmessgerät unter Verwendung einer solchen Mikrowellensendeeinrichtung anzugeben, die besonders kompakt und kostengünstig sind.

Die zuvor hergeleitete und aufgezeigte Aufgabe ist ausgehend von der eingangs beschriebenen Mikrowellensendeeinrichtung dadurch gelöst, dass der Mikrowellensender und die Elektronikeinrichtung einen Verguss aufweisen.

Dadurch dass der Mikrowellensender und die Elektronikeinrichtung einen Verguss aufweisen, ergibt sich der überraschende Vorteil, dass die Mikrowellensendeeinrichtung in einer kompakteren Bauweise ausgeführt werden kann, da sich durch den Verguss die Mindestgröße der zur Leitung der verwendeten Mikrowellenstrahlung eingesetzten Komponenten bei vorgegebener Frequenz der verwendeten Mikrowellenstrahlung verringert. Der Effekt ist zwar auch spürbar bei Streifenleitungen, besonders große Auswirkungen ergeben sich aber insbesondere bei Hohlleitungen. Verantwortlich für diesen Effekt ist, dass die bei dem Verguss verwendete Vergussmasse eine höhere Dielektrizitätszahl - auch Permittivität genannt - aufweist als die Luft, die im Stand der Technik die Elektronikeinrichtung umgibt. In Abhängigkeit von der Geometrie eines Wellenleiters besitzt jeder Wellenleiter eine sogenannte Grenzfrequenz. Größere Hohlleiter haben eine kleinere Grenzfrequenz. Signale mit einer Frequenz unterhalb der Grenzfrequenz werden stark gedämpft und sind im Hohlleiter praktisch nicht ausbreitungsfähig. Wird die Dielektrizitätszahl des Füllmediums eines Wellenleiters erhöht, so verringert sich seine Grenzfrequenz. Bei gegebener Arbeitsfrequenz einer Mikrowellensendeeinrichtung ergibt sich daher, dass bei der Verwendung einer Vergussmasse mit erhöhter Dielektrizitätszahl die baulichen Abmessungen der wellenleitenden Komponenten reduziert werden können.

Die Verringerung der Mindestgröße bei Hohlleitungen dient hier als Beispiel, wie der Verguss mit einer Vergussmasse, die eine höhere Dielektrizitätszahl aufweist als Luft oder das sonst üblicherweise die Elektronikeinrichtung umgebende Medium, die Mindestgröße eines Bauteils der Elektronikeinrichtung verringert. Bei einem runden luftgefüllten Hohlleiter mit 31 mm Durchmesser ergibt sich beispielsweise die Grenzfrequenz zu etwa 5,7 GHz. Eine Vergussmasse, die sich als besonders geeignet herausgestellt hat, ist ein transparenter Silikonkautschuk mit einer Dielektrizitätszahl von etwa 2,3 bei Frequenzen im Bereich von 5,7 GHz bis etwa 26 GHz. Wird ein runder Hohlleiter mit dieser Vergussmasse vergossen, dann genügt bereits ein Durchmesser des runden Hohlleiters von etwa 21 mm, um eine Grenzfrequenz von 5,7 GHz zu erhalten. Der Skalierungsfaktor ist der Kehrwert der Wurzel der Dielektrizitätszahl der Vergussmasse. Eine vergleichbare Verringerung der Mindestgröße durch Verguss kann auch weitere Bauteile der Elektronikeinrichtung und des Mikrowellensenders betreffen, was sich die Erfindung zu Nutze macht.

Gemäß einer vorteilhaften Weiterbildung der Erfindung ist vorgesehen, dass der Mikrowellensender und die Elektronikeinrichtung auf einer gemeinsamen Leiterplatte angeordnet sind und einen gemeinsamen Verguss aufweisen.

Indem die Elektronikeinrichtung und der Mikrowellensender auf einer gemeinsamen Leiterplatte angeordnet sind und diese von einem gemeinsamen Verguss umgeben sind, wird eine besonders kompakte Bauform der erfindungsgemäßen Mikrowellensendeeinrichtung erhalten. Die notwendigen elektrischen Verbindungen zwischen der Elektronikeinrichtung und dem Mikrowellensender können bei dieser Ausgestaltung besonders kurz und Platz sparend ausfallen. Auch bei der Herstellung des Füllstandmessgeräts ergeben sich Vorteile. Insbesondere muss nur eine Leiterplatte gefertigt und mit Bauteilen bestückt werden, wodurch sich die Anzahl der Arbeitsschritte verringert, die bei der Herstellung notwendig sind. Alternativ zu einer gemeinsamen Leiterplatte können der Mikrowellensender und die Elektronikeinrichtung auch auf zwei oder mehreren Leiterplatten angeordnet sein, die in unmittelbarer Nachbarschaft angeordnet sind und zudem einen gemeinsamen Verguss aufweisen; der grundsätzliche Vorteil bleibt auch bei dieser modularen Variante erhalten.

Eine vorteilhafte Ausgestaltung der Erfindung zeichnet sich dadurch aus, dass der Hohlleiter, der Mikrowellensender und die Elektronikeinrichtung einen gemeinsamen Verguss aufweisen. Durch den gemeinsamen Verguss des Hohlleiters, des Mikrowellensenders und der Elektronikeinrichtung ergibt sich vor allem bei der Herstellung der Mikrowellensendeeinrichtung der Vorteil, dass alle drei Bauteile in einem einzigen gemeinsamen Arbeitsschritt vergossen werden können. Darüber hinaus erhöht der gemeinsame Verguss die Stabilität der gesamten Mikrowellensendeeinrichtung, wodurch die Mikrowellensendeeinrichtung weniger empfindlich gegenüber mechanischen Belastungen ist, wie z. B. Erschütterungen und Vibrationen.

Gemäß einer besonders vorteilhaften Weiterbildung der Erfindung ist vorgesehen, dass der Hohlleiter einen Abschluss aufweist. Der Abschluss schließt den Hohlleiter prozessseitig ab und gewährleistet so, dass das im Behälter befindliche Medium nicht mit Teilen der Mikrowellensendeeinrichtung - abgesehen von dem Abschluss - in Kontakt kommt. Da der Abschluss die Schnittstelle zwischen dem Hohleiter und dem im Behälter befindlichen Medium darstellt, besteht der Abschluss aus einem Material, welches durchlässig für die von der Elektronikeinrichtung erzeugte Strahlung ist. Beispielsweise eignet sich hierfür PTFE (Polytetrafluorethylen).

Darüber hinaus ist es vorteilhaft, wenn die Dieelektrizitätszahl der Vergussmasse mit der Dielektrizitätszahl des Abschlusses übereinstimmt. Hierdurch werden Sprünge der Dielektrizitätszahl in Ausbreitungsrichtung der Mikrowellenstrahlung vermieden, die andernfalls zu unerwünschten Reflexionen führten. Die Übereinstimmung muss nicht exakt sein. Auch bereits eine näherungsweise Übereinstimmung ist in der Regel ausreichend, um die Reflexionen an Sprüngen der Dielektrizitätszahl hinreichend gut zu vermeiden.

Vorzugsweise ist vorgesehen, dass die Mittenfrequenzen der verwendeten Mikrowellensignale im Bereich von 1 GHz bis 100 GHz liegen. Bei einer besonders vorteilhaften Ausgestaltung der Erfindung liegen die Mittenfrequenzen der verwendeten Mikrowellensignale im Bereich von 4 GHz bis 6 GHz, insbesondere bei 5 GHz.

Ein besonderer Vorteil kann dadurch erzielt werden, dass der Verguss als Maßnahme zur Realisierung des Explosionsschutzes, z. B. zur Realisierung der Eigensicherheit, genutzt wird, falls die Anwendung dies erfordert. Da radarbasierte Füllstandsmessgeräte - und mit Ihnen auch Mikrowellensendeeinrichtungen - in ganz unterschiedlichen Prozessumgebungen eingesetzt werden, müssen sie auf den jeweiligen Anwendungsfall abgestimmte sicherheitstechnische Eigenschaften aufweisen, müssen beispielsweise explosionsgeschützt ausgeführt sein, dürfen also keine Zündquelle bei Vorhandensein einer explosionsfähigen Atmosphäre darstellen. Die Zündschutzart Eigensicherheit beruht auf der Begrenzung von elektrischer Energie innerhalb von Betriebsmitteln und Verbindungsleitungen, die einer explosionsfähigen Atmosphäre ausgesetzt sind, auf ein Niveau unterhalb dessen, bei dem eine Zündung entweder durch Funkenbildung oder Erwärmung hervorgerufen werden kann. Bestimmungen für die Konstruktion und Prüfung eigensicherer Betriebsmittel, die für die Verwendung in gasexplosionsgefährdeten Bereichen bestimmt sind, sowie für zugehörige Betriebsmittel, die für den Anschluss an eigensichere Stromkreise gedacht sind, die in solche Bereiche hineinführen, werden von der Norm EN 60079-1 "Explosionsfähige Atmosphäre - Teil 11: Geräteschutz durch Eigensicherheit "i" " festgelegt. Diese Norm gilt auch für elektrische Betriebsmittel oder Teile elektrischer Betriebsmittel, die sich außerhalb des gasexplosionsgefährdeten Bereiches befinden oder durch eine andere Zündschutzart nach EN 60079-0 geschützt sind, sofern die Eigensicherheit der elektrischen Stromkreise im gasexplosionsgefährdeten Bereich von der Auslegung und der Bauart dieser elektrischen Betriebsmittel oder von Teilen dieser Betriebsmittel abhängen kann.

In einem anderen Ausführungsbeispiel realisiert der Verguss eine Vergusskapselung im Sinne des Zündschutzes. Die Zündschutzart Vergusskapselung wird auch als Zündschutzart "Ex-m" bezeichnet. Bei der Vergusskapselung im Sinne des Zündschutzes werden Bauteile, die eine potentielle Zündquelle darstellen können, mit einer für diesen Anwendungszweck geeigneten Vergussmasse überzogen. Durch diese Maßnahme wird sichergestellt, dass die umgebende explosionsfähige Atmosphäre nicht mit diesen Bauteilen in Kontakt kommt. Bei der Zündschutzart Vergusskapselung darf die Oberflächentemperatur der Vergusskapselung bei Auftreten eines zu erwartenden Fehlers nicht die Zündtemperatur der umgebenden explosionsfähigen Atmosphäre erreichen. Die Norm EN 60079-18 "Explosionsfähige Atmosphäre - Teil 18: Geräteschutz durch Vergusskapselung "m" legt die Anforderungen an Betriebsmittel dieser Zündschutzart fest. Bestenfalls wird der Verguss so vorgesehen, um Anforderungen aus mehreren Zündschutznormen erfüllt werden können.

Die zuvor hergeleitete und aufgezeigte Aufgabe ist ausgehend von dem eingangs beschriebenen Füllstandmessgerät auch dadurch gelöst, dass die bei dem Füllstandmessgerät verwendete Mikrowellensendeeinrichtung wie vorstehend beschrieben ausgeführt ist, was es auch gestattet, das Füllstandmessgerät mit reduzierten Abmessungen und Kosten zu fertigen.

Gemäß einer vorteilhaften Weiterbildung der Erfindung ist vorgesehen, dass das Füllstandmessgerät eine druckfeste Kapsel aufweist, die Mikrowellensendeinrichtung innerhalb der druckfesten Kapsel angeordnet ist, die druckfeste Kapsel ein strahlungsdurchlässiges Prozessfenster aufweist und der Hohlleiter den Mikrowellensender mit dem strahlungsdurchlässigen Prozessfenster verbindet. Das strahlungsdurchlässige Prozessfenster kann insbesondere auch durch einen oben beschriebenen Abschluss gebildet werden.

Die druckfesten Kapselung ist eine weitere mögliche Zündschutzart. Bei dieser auch als "Ex-d" bezeichneten Zündschutzart wird der Explosionsschutz dadurch sichergestellt, dass eventuell innerhalb der Kapsel auftretende Explosionen durch die druckfeste Kapselung derart abgeschirmt werden, dass eine außerhalb der druckfesten Kapsel vorherrschende explosionsfähige Atmosphäre nicht entzündet wird. Durchführungen in der Kapselwand müssen daher zünddurchschlagsichere Spalten aufweisen. Auch darf die Oberflächentemperatur der Kapsel bei Auftreten eines zu erwartenden Fehlers nicht die Zündtemperatur der umgebenden explosionsfähigen Atmosphäre erreichen. Die Norm EN 60079-1 "Explosionsfähige Atmosphäre - Teil 1: Geräteschutz durch druckfeste Kapselung "d" " legt die Anforderungen an Betriebsmittel dieser Zündschutzart fest.

Von dem Mikrowellensender in den Hohlleiter eingekoppelte Mikrowellensignale werden von dem Hohlleiter bis zum strahlungsdurchlässigen Prozessfenster geleitet und durch das strahlungsdurchlässige Prozessfenster in den Behälter abgestrahlt, in dem sich das Medium befindet, dessen Füllstand zu bestimmen ist. Um die Abstrahlung der Mikrowellensignale in den Behälter zu ermöglichen, ist das strahlungsdurchlässige Prozessfenster durchlässig für wenigstens den bestimmten Bereich des elektromagnetischen Spektrums, den das Füllstandmessgerät mit dem Mikrowellensender aussenden kann. Von dem Medium im Behälter werden diese Mikrowellensignale reflektiert und gelangen über das strahlungsdurchlässige Prozessfenster und den Hohlleiter zurück zum Mikrowellensender, der üblicherweise gleichzeitig auch als Mikrowellenempfänger fungiert.

Das strahlungsdurchlässige Prozessfenster muss nicht am prozessseitigen Ende des Hohlleiters angeordnet sein, sondern kann an einer beliebigen Stelle zwischen den beiden Enden des Hohlleiters in den Hohlleiter eingesetzt sein. Insbesondere kann der Hohlleiter hier mehrteilig ausgebildet sein. Beispielsweise kann der Hohlleiter einen geräteseitigen Teil aufweisen, der mit Vergussmasse vergossen ist und von dem strahlungsdurchlässigen Prozessfenster prozessseitig abgeschlossen wird. An das strahlungsdurchlässige Prozessfenster schließt sich bei diesen Ausgestaltungen ein prozessseitiger Teil des Hohlleiters an, der ebenfalls vergossen sein kann.

Da sowohl die Elektronikeinrichtung als auch der Mikrowellensender in der druckfesten Kapsel angeordnet sind, sind keine aufwendigen Leitungsdurchführungen durch die druckfeste Kapsel zur Verbindung der Elektronikeinrichtung mit dem Mikrowellensender erforderlich.

Eine vorteilhafte Ausgestaltung der Erfindung zeichnet sich dadurch aus, dass der Verguss den Innenraum der druckfesten Kapsel vollständig ausfüllt. Eine vollständige Füllung des Innenraums der druckfesten Kapsel mit Vergussmasse erhöht die Stabilität des gesamten Füllstandmessgeräts. Insbesondere sind die im Inneren der druckfesten Kapsel angeordneten Bauteile des Füllstandmessgeräts hierdurch besonders geschützt gegen ein Losrütteln durch Erschütterungen oder dergleichen.

Gemäß einer besonders vorteilhaften Weiterbildung der Erfindung ist vorgesehen, dass das strahlungsdurchlässige Prozessfenster ein Glasfenster ist. Das Material Glas eignet sich besonders für das strahlungsdurchlässige Prozessfenster des erfindungsgemäßen explosionsgeschützten Geräts. Glas ist nicht nur in einem weiten Bereich des Spektrums der elektromagnetischen Strahlung durchlässig, sondern kann auch durch entsprechende Zusätze eingefärbt werden, d. h. für nicht verwendete Bereiche des Spektrums der elektromagnetischen Strahlung undurchlässig gemacht werden, so dass die Eigenschaften des strahlungsdurchlässigen Prozessfensters spezifisch an die Anwendung angepasst werden können, insbesondere können so unterschiedliche Brechungszahlen realisiert werden. Des Weiteren kann aus der großen Vielfalt bekannter Gläser das Glas mit den gewünschten Eigenschaften gewählt werden. Zudem ergeben sich durch die Verwendung von Glas für das strahlungsdurchlässige Prozessfenster auch überschaubare Materialkosten.

Es hat sich als besonders vorteilhaft herausgestellt, wenn das Glasfenster ein metallverschmolzenes Glas aufweist. Metallverschmolzene Gläser sind thermisch vorgespannte Spezialgläser für die Prozessbeobachtung. Bei der Herstellung wird eine Glasscheibe in einen Metallring eingeschmolzen und verbindet sich dauerhaft mit diesem. Unterschiedliche Wärmeausdehnungskoeffizienten von Glas und Metall bewirken einen homogenen Druckspannungszustand im gesamten Glaskörper. Ein Vorteil, der sich aus der Verwendung von metallverschmolzenem Glas für das strahlungsdurchlässige Prozessfenster ergibt, ist dass metallverschmolzene Gläser im Schadensfall lediglich Oberflächenrisse zeigen, aber ein Totalversagen in der Regel nicht eintritt.

Gemäß einer weiteren bevorzugten Weiterbildung der Erfindung ist vorgesehen, dass das Füllstandmessgerät über eine Ausgabeeinrichtung verfügt, beispielsweise durch eine Busschnittstelle gebildet wird. Über eine Ausgabeeinrichtung in Form einer Busschnittstelle, eines Displays oder einer Funkverbindung können die von dem erfindungsgemäßen explosionsgeschützten Gerät gesammelten Daten oder - nach einer erfolgten Auswertung oder Vorauswertung - Informationen komfortabel und sicher ausgegeben werden.

Im Einzelnen gibt es nun eine Vielzahl von Möglichkeiten, das erfindungsgemäße Füllstandmessgerät auszugestalten und weiterzubilden. Dazu wird auf die dem Patentanspruch 1 nachgeordneten Patentansprüche sowie auf die nachfolgende detaillierte Beschreibung bevorzugter Ausführungsbeispiele der Erfindung unter Bezugnahme auf die Zeichnung verwiesen. In der Zeichnung zeigt
- Fig. 1: ein Schnittbild entlang der Längsachse eines erfindungsgemäßen Füllstandmessgeräts und
- Fig. 2: verschiedene Ansichten des erfindungsgemäßen Füllstandmessgeräts.

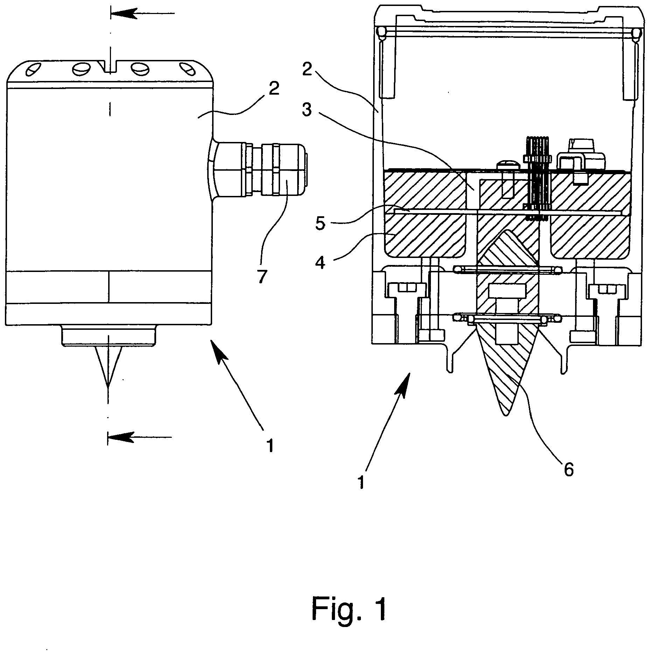

Das Schnittbild der Fig. 1 offenbart den inneren Aufbau eines Ausführungsbeispiels eines erfindungsgemäßen Füllstandmessgeräts 1 mit einer erfindungsgemäßen Mikrowellensendeeinrichtung. Das Füllstandmessgerät weist eine druckfeste Kapsel 2 auf, die in der Lage ist, innerhalb der druckfesten Kapsel 2 auftretende Explosionen von der umgebenden Atmosphäre abzuschirmen. Innerhalb der druckfesten Kapsel 2 ist ein Hohlleiter 3 zur Führung von Mikrowellensignalen angeordnet. Der Hohlleiter 3 ist von einem Verguss 4 ausgefüllt und umgeben. Ebenfalls von dem Verguss 4 umgeben ist die Leiterplatte 5. Auf der Leiterplatte 5 sind ein Mikrowellensender und eine Elektronikeinrichtung angeordnet. Über den Hohleiter 3 werden die von der Elektronikeinrichtung erzeugten Mikrowellensignale bis zum Abschluss 6 geleitet. Der Abschluss 6 dient der zielgerichteten Abstrahlung der Mikrowellensignale in Richtung des zu beobachtenden Prozesses. Der Abschluss 6 besteht aus einem strahlungsdurchlässigen Material, vorliegend PTFE (Polytetrafluorethylen); andere, hier nicht dargestellte Abschlüsse bestehen beispielsweise aus PEEK (Polyetheretherketon).

Die Mikrowellensendeeinrichtung ist eigensicher ausgestaltet, erfüllt also die einschlägigen Normen dieser Zündschutzart.

Von dem Prozess ausgehende Mikrowellenstrahlung kann von dem Abschluss 6 über den Hohlleiter 3 zum Mikrowellensender gelangen. Hierbei fungiert der Mikrowellensender auch als Empfangseinrichtung. Zum Datenaustausch mit einer nicht dargestellten externen Steuerungs- und Auswerteeinrichtung weist das erfindungsgemäße Füllstandmessgerät 1 eine Ausgabeeinrichtung 7 auf.

Aus dem Schnittbild der Fig. 1 ist ersichtlich, dass die druckfeste Kapsel 2 des Füllstandmessgeräts 1 nicht vollständig mit dem Verguss 4 ausgefüllt ist. Hierdurch ergibt sich innerhalb der druckfesten Kapsel 2 oberhalb des Vergusses 4 ein nicht mit Vergussmaterial ausgefüllter Luftraum. Nach einer weiteren Ausgestaltung des erfindungsgemäßen Füllstandmessgeräts 1 kann die druckfeste Kapsel 2 auch vollständig mit Vergussmaterial ausgefüllt sein. Ebenso kann der Luftraum anstatt mit Vergussmaterial mit anderen Medien gefüllt oder evakuiert sein. Zur Füllung des Luftraums bieten sich insbesondere chemisch inerte Medien an, da hierdurch chemische Reaktionen des Füllmediums mit dem Material der druckfesten Kapsel 2 und dem restlichen Inhalt der druckfesten Kapsel 2 effektiv vermeiden lassen. Hierfür eignen sich insbesondere nichtradioaktive Edelgase.

Dadurch, dass die Leiterplatte 5, auf der der Mikrowellensender und die Elektronikeinrichtung angeordnet sind, einen derartigen Verguss 4 aufweist, dass die vorgenannten Bauteile der Zündschutzart "EX-i" genügen, und die Leiterplatte 5 zusammen mit dem Hohlleiter 3 vollständig vergossen und innerhalb der druckfesten Kapsel 2 angeordnet sind, genügen der Hohlleiter 3, die Leiterplatte 5, der Mikrowellensender und die Elektronikeinrichtung sowohl der Zündschutzart "EX-d" als auch der Zündschutzart "EX-i".

Der Verguss 4 ist derart ausgestaltet, dass sie die Leiterplatte 5 mit den darauf angeordneten Bauteilen und den Hohlleiter 3 vollkommen umschließt und mechanisch miteinander verbindet. Des Weiteren verbindet der Verguss 4 den Hohlleiter 3 und die Leiterplatte 5 mit der druckfesten Kapsel 2. Durch die Verbindung der Leiterplatte 5, des Hohlleiters 3 und der druckfesten Kapsel 2 durch den Verguss 4 werden die vorgenannten Bauteile des erfindungsgemäßen Füllstandsmessgeräts 1 mechanisch stabilisiert und sind hierdurch vor Schwingungen und Erschütterungen weitestgehend geschützt.

Der Verguss 4 besteht aus einem äußerst homogenen Vergussmaterial, das insbesondere keine Blasen oder Verunreinigungen aufweist. Das Vergussmaterial des Vergusses 4 weist nicht nur eine besonders gute Kohäsion auf, die ihm eine besondere Stabilität verleiht, sondern hat auch hervorragende Adhäsionseigenschaften. Die Adhäsionseigenschaften des Vergusses 4 gewährleisten eine sichere und nahezu spaltfreie Verbindung zwischen dem Verguss 4 und den Oberflächen der mit dem Vergussmaterial in Kontakt kommenden Bauteilen. Von Bedeutung ist auch, dass der Verguss 4 den Hohlraum innerhalb des Hohlleiters 3 und den angrenzenden Oberflächen praktisch spaltfrei ausfüllt, da derartige Spalten zu unerwünschten Reflektionen der Mikrowellensignale innerhalb des Hohlleiters 3 führen würden.

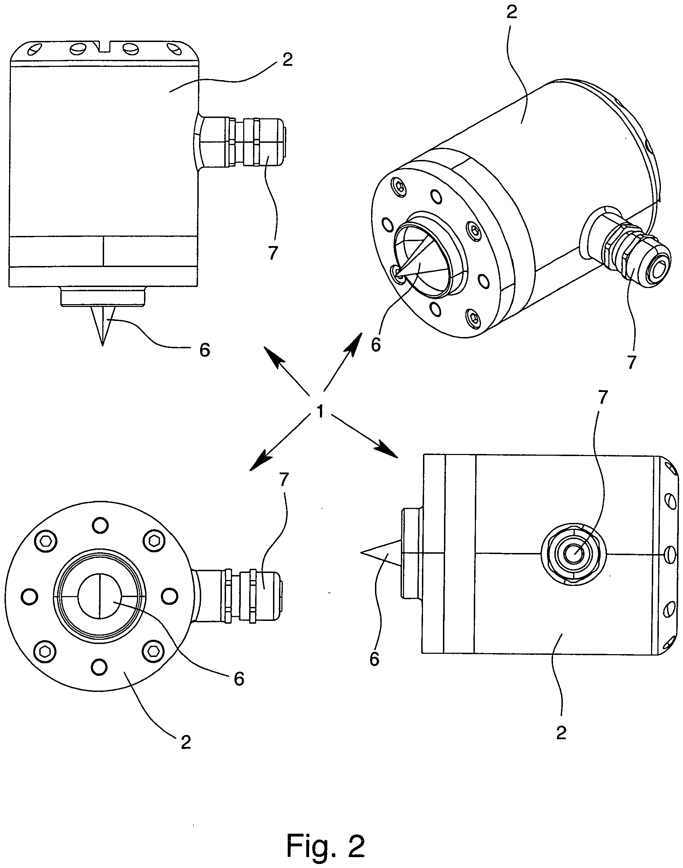

Die Fig. 2 zeigt das erfindungsgemäße Füllstandmessgerät 1 in vier verschiedenen Ansichten. Hierbei ist insbesondere die seitliche Anordnung der Kabeldurchführung 7 ersichtlich. An der dem Prozess zugewandten Seite des Füllstandmessgeräts 1 ist der konisch zulaufende Abschluss 6 erkennbar. Das Füllstandmessgerät verfügt hier über eine Datenschnittstelle, die dem Kommunikationsstandard PROFIBUS-PA genügt, andere Kommunikationsstandards sind gleichermaßen realisierbar.

## Patentansprüche

1. Mikrowellensendeeinrichtung für ein Füllstandmessgerät (1) mit einer Elektronikeinrichtung, einem Mikrowellensender und einem Hohlleiter (3), wobei der Hohlleiterinnenraum mit Vergussmasse vergossen ist,
**dadurch gekennzeichnet,**
**dass** der Mikrowellensender und die Elektronikeinrichtung eine Verguss (4) aufweisen.

2. Mikrowellensendeeinrichtung nach Anspruch 1, **dadurch gekennzeichnet, dass** der Mikrowellensender und die Elektronikeinrichtung auf einer gemeinsamen Leiterplatte (5) angeordnet sind und einen gemeinsamen Verguss (4) aufweisen.

3. Mikrowellensendeeinrichtung nach Anspruch 1 oder 2, **dadurch gekennzeichnet, dass** der Hohlleiter (3), der Mikrowellensender und die Elektronikeinrichtung einen gemeinsamen Verguss (4) aufweisen.

4. Mikrowellensendeeinrichtung nach einem der Ansprüche 1 bis 3, **dadurch gekennzeichnet, dass** der Hohlleiter (3) einen Abschluss (6) aufweist.

5. Mikrowellensendeeinrichtung nach Anspruch 4, **dadurch gekennzeichnet, dass** die Dieelektrizitätszahl der Vergussmasse des Vergusses (4) mit der Dielektrizitätszahl des Abschlusses (6) übereinstimmt.

6. Mikrowellensendeeinrichtung nach einem der Ansprüche 1 bis 5, **dadurch gekennzeichnet, dass** die Mittenfrequenzen der verwendeten Mikrowellensignale im Bereich von 1 GHz bis 100 GHz liegen.

7. Mikrowellensendeeinrichtung nach einem der Ansprüche 1 bis 6, **dadurch gekennzeichnet, dass** die Mittenfrequenzen der verwendeten Mikrowellensignale im Bereich von 4 GHz bis 6 GHz, insbesondere bei 5GHz, liegen.

8. Mikrowellensendeeinrichtung nach einem der Ansprüche 1 bis 7, **dadurch gekennzeichnet, dass** der Verguss (4) eine Vergusskapselung im Sinne des Zündschutzes ist, die Vergusskapselung insbesondere die Norm EN 60079-18 erfüllt.

9. Mikrowellensendeeinrichtung nach einem der Ansprüche 1 bis 8, **dadurch gekennzeichnet, dass** die Mikrowellensendeeinrichtung eigensicher ausgestaltet ist.

10. Füllstandmessgerät (1) mit einer Mikrowellensendeeinrichtung
**dadurch gekennzeichnet,**
die Mikrowellensendeeinrichtung nach einem der Ansprüche 1 bis 9 ausgestaltet ist.

11. Füllstandmessgerät (1) nach Anspruch 10, **dadurch gekennzeichnet, dass** das Füllstandmessgerät (1) eine druckfeste Kapsel (2) aufweist, die Mikrowellensendeinrichtung innerhalb der druckfesten Kapsel angeordnet ist, die druckfeste Kapsel (2) ein strahlungsdurchlässiges Prozessfenster aufweist und der Hohlleiter (3) den Mikrowellensender mit dem strahlungsdurchlässigen Prozessfenster verbindet.

12. Füllstandmessgerät (1) nach Anspruche 10 oder 11, **dadurch gekennzeichnet, dass** der Verguss (4) den Innenraum der druckfesten Kapsel (2) vollständig ausfüllt.

13. Füllstandmessgerät (1) nach einem der Ansprüche 10 bis 12, **dadurch gekennzeichnet, dass** das strahlungsdurchlässige Prozessfenster ein Glasfenster, das Glasfenster insbesondere ein metallverschmolzenes Glas aufweist.
